# EUROPÄISCHE PATENTSCHRIFT

(11) **EP 2 297 440 B1**
(45) Veröffentlichungstag und Bekanntmachung des Hinweises auf die Patenterteilung: **21.12.2011**
(21) Anmeldenummer: 09768838.6
(22) Anmeldetag: 19.06.2009
(51) Int. Cl.: F02D 41/00, F02B 47/02, F02D 19/00

(54) **VERFAHREN ZUM ABBREMSEN EINER BRENNKRAFTMASCHINE**
METHOD FOR BRAKING AN INTERNAL COMBUSTION ENGINE
PROCÉDÉ DE FREINAGE D'UN MOTEUR À COMBUSTION INTERNE

(30) Priorität: 24.06.2008 DE 102008002903
(43) Veröffentlichungstag der Anmeldung: 23.03.2011
(73) Patentinhaber: Technische Universität Hamburg-Harburg, 21073 Hamburg (DE); TuTech Innovation GmbH, 21079 Hamburg (DE)
(72) Erfinder: WIRZ, Friedrich, 86444 (DE)
(74) Vertreter: Hansen, Jochen
(86) Internationale Anmeldenummer: PCT/DE2009/075029
(87) Internationale Veröffentlichungsnummer: WO 2009/155914

(56) Entgegenhaltungen:
- WO-A1-2007/118435
- AU-B2- 483 181
- DE-A1- 3 618 700
- DE-A1- 19 622 947
- GB-A- 238 942
- US-A1- 2008 097 679
- US-B1- 6 311 651

## Beschreibung

Die Erfindung betrifft ein Verfahren zum Abbremsen einer Brennkraftmaschine mit einem Brennraum und einer nicht entzündbaren Flüssigkeit.

Im allgemeinen Stand der Technik sind Bremssysteme für Brennkraftmaschinen bekannt, die beispielsweise von außen durch entsprechende Bremssysteme die Brennkraftmaschine abbremsen.

Die Abbremsung einer Brennkraftmaschine ist mit mechanischen oder thermodynamischen Hilfsmitteln möglich. Beispielsweise können Reibbremsen auf dem Antriebsstrang angeordnet werden, um so die Brennkraftmaschine durch Wärmeentwicklung innerhalb der Reibbremsanordnung bei Bedarf abzubremsen. Alternativ sei hier eine Wirbelstrombremse genannt, die ebenfalls geeignet wäre, um eine Brennkraftmaschine abzubremsen.

Aus der Druckschrift DE 10 2006 059 080 A1 ist eine Anordnung und ein dazugehöriges Verfahren zum Abbremsen eines Fahrzeugs mit einer Brennkraftmaschine bekannt. Hierbei soll die Steuerung der Abbremsung insbesondere mittels eines Fahrpedals erfolgen. Die mit der gewünschten Bremskraft verbundene Stellung des Fahrpedals regelt so die Stärke der Abbremsung. Zum Abbremsen werden Einzelmassnahmen oder eine Kombination dieser Einzelmassnahmen vorgeschlagen, wobei diese das Abschalten der Zündung, sowie der Kraftstoffzumesseinrichtung, Variation des Ladedrucks, Ansteuerung von Ventilen und Klappen, sowie eines Retarders oder anderen an die Brennkraftmaschine angeschlossenen Verbrauchern; sein können. Insbesondere ist durch die Kombination derartiger Maßnahmen ein kontinuierliches Abbremsen möglich.

Weiterhin ist aus der GB 238,942 A eine Anordnung zur Einbringung von Wasser in eine Verbrennungsmaschine bekannt. Zum Abbremsen wird Wasser beispielweise aus dem Kühler entnommen und in den Ansaugtrakt der Verbrennungsmaschine zugeführt. Bevor oder während das Wasser in den Ansaugtrakt eingebracht wird, erfolgt eine Feinzerstäubung des Wassers. Alternativ kann auch Wasserdampf verwendet werden, der ebenfalls beispielsweise aus dem Kühlkreislauf entnommen wird. Zum einen dient ein derartiges Verfahren mit dazugehöriger Anordnung zum Entfernen von Kohlenstoffablagerungen im Verbrennungsraum der Verbrennungsmaschine bei gleichzeitiger Leistungssteigerung und Optimierung und zum anderen dient ein derartiges Verfahren mit dazugehöriger Anordnung zum Abbremsen der Verbrennungsmaschine. Das Abbremsen der Verbrennungsmaschine erfolgt hierbei bei geschlossener Drosselklappe, wobei Wasser, Wasserdampf oder vernebeltes Wasser in den Ansaugtrakt der Verbrennungsmaschine eingebracht wird.

In der Druckschrift AT 107 194 ist ein Verfahren beschrieben, in dem während des Saughubes bei Viertaktmotoren bzw. während der Einlassperiode bei Zweitaktmotoren Wasser in einen Zylinderraum eingebracht wird. Hierbei dient das Wasser insbesondere dem Vermeiden einer Überhitzung und Vorzündung des Kraftstoffluftgemisches, so dass der Verdichtungsgrad des Kraftstoffluftgemisches gesteigert werden kann. Weiter wird klargestellt, dass während des Arbeitshubes keine Wärme aus dem Zylinder entweichen kann, so dass die Kraft der Explosion vollkommen nutzbar gemacht wird. Hierdurch wird insgesamt eine größere Leistung erzielt. Ferner sind in dieser Anordnung Wärmeschutzmittel vorgesehen, die ein Abwandern der Wärme nach außen verhindern. Insgesamt ist das Kraftstoftluftgemisch mit weniger Verunreinigungen belastet, was zu einer Leistungssteigerung führt, die darin begründet ist, dass eine vollständigere und raschere Explosion des Kraftstoffluftgemisches stattfindet.

Weiter ist aus der Druckschrift CH 250 466 eine Anordnung für einen Turboverdichter mit Kühlung durch Wassereinspritzung in das Arbeitsmittel bekannt. Hierbei wird ein Teil des zu verdichtenden Arbeitsmittels mit einem Kühlwasser belastet, wobei dieses durch Einspritzen in das Arbeitsmittel durch Zerstäubung erfolgt. Hierbei dient des Wasser der Kühlung des Turboverdichters, der erhebliche Temperaturen während der Arbeit erreicht.

Die Druckschrift DE 100 62 835 A1 offenbart einen Kolbenverbrennungsmotor mit sequentieller Dampfeinspritzung. Hierbei soll der Motor derart verbessert werden, dass thermische Verluste abnehmen und gleichzeitig der Wirkungsgrad der Maschine gesteigert wird. Dies wird dadurch erreicht, dass die Brennraumwandung des Motors thermisch isolierend beschichtet wird, gleichzeitig dient diese isolierende Schicht als Wärmespeicher für die Energie, die zur Drucksteigerung des zyklisch eingespritzten Wasserdampfes benutzt wird. Insbesondere wird in dieser Druckschrift beschrieben, dass mehrere Zyklen mit Wasserdampfeinspritzung erfolgen, während derer die Maschine dampfmotorisch arbeitet.

Aus der Druckschrift DE 692 09 636 T2 ist ein Dieselmotor mit Wassereinspritzung bekannt. Diese Druckschrift offenbart ein Einbringen eines Kraftstoffwassergemisches in den Verbrennungsraum, das zu einer Verringerung von Stickoxiden in der Verbrennungsmaschine führt. Weiter beschreibt diese Druckschrift ein gemeinsames Kraftstoffeinspritzventil, durch das Kraftstoff und Wasser gemeinsam eingebracht werden können.

Weiter ist im Stand der Technik eine Gegendruckbremse, die Riggenbach-Gegendruckbremse bekannt, die als dynamische Bremse bei Dampflokomotiven arbeitet und die Dampflokomotiven in deren dampfbetriebenen Antriebszylindern abbremst und so den Verschleiß und eine Überhitzung der herkömmlichen Radbremseinrichtungen verhindert und eine dauerhaft hohe Bremskraft erlaubt. Hierbei wird bei der Umstellung der Steuerung von Leistungsbetrieb auf Bremsbetrieb eine Öffnung zum Ansaugen sauberer Außenluft freigegeben und mit der Einspritzung von Wasser in die Ansaugluft in die dampfbetriebenen Antriebszylindern kombiniert. Das Einbringen des Wassers dient dem Schutz der dampfbetriebenen Antriebszylindern vor Überhitzung. Weiter wird ein Regelventil verwendet um den Gegendruck, der bei der Zufuhr der mit Wasser versetzten Luft in den dampfbetriebenen Antriebszylindern entsteht, zu regulieren, da auf Grund der hohen Belastung der dampfbetriebenen Antriebszylindern ein plötzliches Explodieren möglich wäre.

Bei der Kolbenbewegung in den dampfbetriebenen Antriebszylindern wird das Dampfluftgemisch verdichtet und gleichzeitig erhitzt, danach in dem verdichteten und erhitzten Zustand aus dem dampfbetriebenen Antriebszylinder entlassen, was eine schnelle Ausdehnung nach sich zieht. Diese Ausdehnung wird bei der Riggenbach-Gegendruckbremse durch einen Schalldämpfer kompensiert. Insgesamt lässt sich so die Dampfmaschine als Kompressor betreiben, wobei während des Arbeitsprozesses das Dampfluftgemisch verdichtet und erhitzt wird und anschließend durch ein entsprechendes Auslassventil aus dem Zylinderinnenraum entlassen wird. Der größte Teil der Energie wird hierbei durch das Verdichten des Dampfluftgemisches umgewandelt. Das eingespritzte Wasser innerhalb des Dampfluftgemisches dient insbesondere der Begrenzung der Temperaturen in den dampfbetriebenen Antriebszylindern, die während des Bremsvorganges, nämlich der Kompression der Luft, heiß werden, wodurch insbesondere das Öl zur Schmierung verbrennen könnte.

Aus der DE 196 22 947 A1 ist eine Wassereinspritzung in Verbrennungskraftmaschinen bekannt, bei der in einen Verbrennungsraum eines Zylinders in Abhängigkeit des Kolbenhubs, jedoch nach der Gemischentzündung, dem Arbeitstakt, Wasser in diesen eingespritzt wird. Dieses Einspritzen dient der Erhöhung des Wirkungsgrades der Verbrennungsmaschine und der Reduzierung von Stickoxyden.

Ausgehend von diesem Stand der Technik, wird nach einer Lösung gesucht, Brennkraftmaschinen verschleißarm zu bremsen, ohne von Außen Einfluß auf den Antriebsstrang, beispielsweise die Kurbelwelle oder die Antriebswelle zu nehmen und weiter auf eine Überbelastung, beispielsweise durch zusätzliche Druckbeaufschlagung der Innenräume der Brennkraftmaschine zu verzichten.

Aufgabe der Erfindung ist es ein Verfahren anzugeben, das es ermöglicht, eine Brennkraftmaschine innerlich hocheffizient zu bremsen, so dass sich eine maximale Bremswirkung in der Brennkraftmaschine ausbildet.

Gelöst wird diese Aufgabe mit einem Verfahren nach Anspruch 1.

Dadurch, dass die nicht entzündbare Flüssigkeit in den Brennraum direkt eingespritzt wird, wobei das Einspritzen um den Zeitpunkt des höchsten Drucks innerhalb der Brennkammer herum erfolgt, wird eine innere Bremswirkung in der Brennkraftmaschine durch Energieübertragung erzeugt, wobei die Energie aus der laufenden, aber nicht mehr im Leistungsbetrieb mit entsprechender Kraftstoffzufuhr gefahrenen Brennkraftmaschine für den Phasenübergang vom flüssigen zum gasförmigen Aggregatzustand der nicht entzündbaren Flüssigkeit umgewandelt wird. Insbesondere erfolgt das Einspritzen direkt in die Brennkammer, so dass das Einbringen und anschließende Ändern des Aggregatzustandes höchst effizient, taktgenau und im richtigen Zeitpunkt erfolgt. Der aufzubringende Druck zum Einspritzen der nicht entzündbaren Flüssigkeit in den Brennraum direkt muss höher sein als der im Brennraum vorherrschende Druck, so dass die nicht entzündbare Flüssigkeit in den Brennraum direkt eingebracht werden kann.

Die Brennkraftmaschine wurde vor dem Einbringen der nicht entzündbaren Flüssigkeit mit einem Kraftstoff gefahren, um entsprechend aus Wärmeenergie, nämlich der Verbrennung des Kraftstoff-Luft-Gemisches im Leistungsbetrieb der Brennkraftmaschine mechanische Energie zu erzeugen.

Durch das Einbringen einer nicht entzündbaren Flüssigkeit an Stelle des Kraftstoffes erfolgt auf Grund der im Brennraum vorherrschenden hohen Temperaturen nach der Kompression im Brennraum ein Phasenübergang der nicht entzündbaren Flüssigkeit von dem Aggregatzustand flüssig in den Aggregatzustand gasförmig. Für diesen Phasenübergang von flüssig zu gasförmig ist Energie notwendig, die dem System in der Brennkraftmaschine in Form von Wärmeabfuhr entzogen wird. Hiermit ist eine Temperaturabnahme des Gasgemisches im Brennraum verbunden, die beim Auslass des Gasgemisches zu einer Energieabfuhr führt, wodurch die Brennkraftmaschine abgebremst wird.

Die Nichtentzündbarkeit der nicht entzündbaren Flüssigkeit ist auf die Umgebung und die Umstände bezogen, beispielsweise kann auch ein nicht selbstentzündender Kraftstoff ohne Einsatz einer Zündung verwendet werden, um entsprechende Energie, die zur Verdampfung notwendig ist, dem System der Brennkraftmaschine zu entnehmen. Die so verdampfte nicht entzündbare Flüssigkeit, die sich innerhalb des Gases in der Brennkraftmaschine befindet, wird beim Gasaustausch / -wechsel der Brennkraftmaschine aus dem Inneren der Brennkraftmaschine entfernt, wodurch die für den Verdampfungsprozess notwendige Energie dem System der Brennkraftmaschine entzogen wird.

Da die Flüssigkeit während der Verdunstung keine Temperaturzunahme erfährt, sinkt die Temperatur des gesamten Gemisches und folglich der Druck, da sich während dieses quasi statischen Vorganges das Innenraumvolumen der Brennkraftmaschine nicht oder nur geringfügig ändert. Die Temperatur- und Druckabnahme überwiegen dabei deutlich gegenüber der geringen Druckzunahme, die durch Einbringung der zusätzlichen Masse, nämlich der eingebrachten nicht entzündbaren Flüssigkeit, verursacht wird. Die Absenkung des Druckniveaus in der Brennkraftmaschine verursacht eine geringere Volumenänderungsarbeit bei der Entspannung gegenüber der Volumenänderungsarbeit bei der vorangegangenen Verdichtung.

Die Gesamtbilanz der Brennkraftmaschine ist somit über den gesamten Arbeitsprozess der Brennkraftmaschine negativ, da mechanische Arbeit in thermische Arbeit (Verdunstungswärme) umgewandelt wird und diese durch einen Austausch des innerhalb der Brennkraftmaschine befindlichen Gases an die Umgebung abgeführt wird.

Wenn die nicht entzündbare Flüssigkeit etwa zu dem Zeitpunkt eingespritzt wird, in dem bei Leistungsbetrieb der Brennkraftmaschine der Kraftstoff eingebracht (bei Maschinen mit innerer Gemischbildung z. B. Dieselmotor oder -gasturbine) und/oder (bei Maschinen mit äußerer Gemischbildung z. B. Ottomotor) entzündet worden wäre, wird der optimale Zeitpunkt für das Einspritzen der nicht entzündbaren Flüssigkeit gewählt. Eine Brennkraftmaschine arbeitet optimal im Leistungsbetrieb, wenn der Kraftstoff zu einem genau definierten Zeitpunkt eingebracht und/oder entzündet wird. Dieser Zeitpunkt wird bevorzugt ebenfalls für das Einbringen der nicht entzündbaren Flüssigkeit gewählt. Hierdurch ist gewährleistet, dass die optimale Energieaufnahme erfolgt, nämlich zum einen durch die Energieaufnahme während des Phasenüberganges vom flüssigen in den gasförmigen Zustand und zum anderen durch die Energieaufnahme durch die dann im gasförmigen Zustand vorhandene nicht entzündbare Flüssigkeit in Form von Temperaturerhöhung.

Dadurch, dass die Brennkraftmaschine eine Gasturbine mit einem Brennraum ist, wobei die nicht entzündbare Flüssigkeit in den Brennraum der Gasturbine eingespritzt wird, kann so die Gasturbine durch entsprechendes Einspritzen der nicht entzündbaren Flüssigkeit abgebremst werden. Hier wird die Energie aus dem verdichteten Arbeitsmedium im Brennraum der Gasturbine für den Phasenübergang vom flüssigen in den gasförmigen Zustand verwendet und somit der Turbine insgesamt Energie entzogen, da auch hier die nunmehr gasförmige nicht entzündbare Flüssigkeit aus dem Gesamtsystem während des Gaswechsels ausgetragen wird.

Wenn die Brennkraftmaschine eine Kolbenmaschine mit einem Brennraum ist, wobei die nicht entzündbare Flüssigkeit in den Brennraum der Kolbenmaschine eingespritzt wird, kann die Kolbenmaschine durch das Einspritzen der nicht entzündbaren Flüssigkeit entsprechend ressourcenschonend und verschleißarm abgebremst werden. Bei einer Kolbenmaschine sind unter anderem Ventile vorgesehen, die zumindest den Auslass oder auch zusätzlich den Einlass steuern.

Dadurch, dass die Kolbenmaschine eine Rotationskolbenmaschine ist, wobei während der Rotationsbewegung des Rotationskolbens kurz vor, im und/oder bevorzugt direkt nach der engsten Stelle, dem oberen Totpunkt, eine nicht entzündbare Flüssigkeit in den Brennraum eingespritzt wird, wird der Zeitpunkt der Einbringung der nicht entzündbaren Flüssigkeit derart eingeschränkt, dass die Abbremsung der Kolbenmaschine gegenüber einem frei wählbaren Zeitpunkt der Einbringung hinsichtlich Verschleiß und Langlebigkeit der Rotationskolbenmaschine optimiert wird.

Wenn die Kolbenmaschine eine Hubkolbenmaschine ist, wobei während der linearen Bewegung des Kolbens kurz vor, im und/oder nach dem oberen Totpunkt eine nicht entzündbare Flüssigkeit in den Brennraum eingespritzt wird, wird der Zeitpunkt der Einspritzung weiter eingeschränkt, was die Wirkung der Abbremsung durch das Einspritzen der nicht entzündbaren Flüssigkeit optimiert.

Die Einspritzung der nicht entzündbaren Flüssigkeit erfolgt bei einer Kolbenmaschine in den Bereich hoher oder auch höchster Drücke, zumindest jedoch ausreichend in den Bereich der Entspannung hineinreichend und nicht in den Bereich der Kompression. Insgesamt wirkt die Einspritzung der nicht entzündbaren Flüssigkeit entlastent, da keine zusätzlichen Momente eingebracht werden, sondern vorhandene Gaskräfte und daraus resultierende Momente verringert werden.

Um den Zeitpunkt der Einspritzung der nicht entzündbaren Flüssigkeit weiter zu optimieren, erfolgt der Beginn der Einbringung im Bereich von 5°, insbesondere 0,5° vor dem oberen Totpunkt bis zu 30°, insbesondere 15° nach dem oberen Totpunkt, bevorzugt im oberen Totpunkt. Hierdurch wird ein Maximum der Abbremsung gewährleistet, da diese Bereiche eine sowohl optimale als auch maximale Energieaufnahme gewährleisten und die Brennkraftmaschine nicht mit zusätzlichen Momenten belasten, sondern sogar entlasten.

Um eine Verflüssigung der in den gasförmigen Zustand übergegangenen nicht entzündbaren Flüssigkeit zu verhindern, endet die Einspritzung der nicht entzündbaren Flüssigkeit vor dem unteren Totpunkt. Eine Übersättigung wird verhindert, wenn die Einspritzung der nicht entzündbaren Flüssigkeit hinreichend vor dem unteren Totpunkt endet, so dass ausreichend Zeit zur Verfügung steht, um die nicht entzündbare Flüssigkeit in den gasförmigen Zustand unter Aufnahme von Energie übertreten zu lassen.

Dadurch, dass die Hubkolbenmaschine als Zweitaktmotor zwei Takte umfasst, wobei ein erster Takt mit dem Schritt Arbeiten vom oberen Totpunkt zum unteren Totpunkt bzw. bis zum Öffnen des Auslassventils verläuft und die nicht entzündbare Flüssigkeit vor, zu Beginn des und/oder im ersten Takt eingespritzt wird, lässt sich so auf einfachste Weise eine Hubkolbenmaschine, die als Zweitaktmotor ausgestaltet ist, abbremsen. Entsprechend ist der Einspritzungsvorgang genau plan- und steuerbar.

Entsprechend wird, wenn die Kolbenmaschine als Viertaktmotor vier Takte umfasst, wobei ein dritter Takt vom oberen Totpunkt zum unteren Totpunkt mit dem Schritt Arbeiten verläuft und die nicht entzündbare Flüssigkeit vor, zu Beginn des und/oder im dritten Takt eingespritzt wird, die Möglichkeit geschaffen, durch Einspritzen einer nicht entzündbaren Flüssigkeit in den Brennraum den Viertaktmotor abzubremsen.

Dadurch, dass die nicht entzündbare Flüssigkeit vernebelt wird, wird eine möglichst große Oberfläche geschaffen, die die entsprechende Energie schneller aufnehmen kann, um den Aggregatzustand von flüssig zu gasförmig zu ändern. Hierdurch kann mehr Energie pro Zeiteinheit übertragen werden, wodurch der Verdunstungsvorgang und die damit verbundene Energieübertragung schneller abläuft.

Wenn bei einer Brennkraftmaschine mit einem Kraftstoffeinspritzsystem die nicht entzündbare Flüssigkeit über das Kraftstoffeinspritzsystem eingespritzt wird, wird ein vorhandenes Kraftstoffeinspritzsystem zur Einspritzung der nicht entzündbaren Flüssigkeit verwendet. Hierbei kann Kraftstoff und die nicht entzündbare Flüssigkeit über ein einziges System nacheinander und abhängig von Leistungs- und Bremsbetrieb eingespritzt werden. Es wird nicht zum selben Zeitpunkt Kraftstoff und die nicht entzündbare Flüssigkeit eingebracht, sondern nur wahlweise in unterschiedlichen Betriebsarten der Brennkraftmaschine, so dass je nach Bedarf die Brennkraftmaschine einen Antrieb erzeugt oder eine Abbremsung der Brennkraftmaschine erfolgt.

Dadurch, dass bei einer Brennkraftmaschine mit einem Kraftstoffeinspritzsystem und einem zweiten Einspritzsystem, die nicht entzündbare Flüssigkeit über das zweite Einspritzsystem eingespritzt wird, besteht zum einen die Möglichkeit die Brennkraftmaschine augenblicklich von Leistungsbetrieb auf Abbremsung umzustellen und zum anderen wird eine Beeinträchtigung des Kraftstoffeinspritzsystems durch die nicht entzündbare Flüssigkeit verhindert. Insbesondere kann die nicht entzündbare Flüssigkeit andere Materialeigenschaften als der Kraftstoff aufweisen und so ein gemeinsam genutztes Einspritzsystem beschädigen. Eine solche Beschädigung wird durch Verwendung zweier unabhängiger Einspritzsysteme verhindert.

Dadurch, dass Wasser als nicht entzündbare Flüssigkeit eingespritzt wird, wird diejenige Flüssigkeit verwendet, die für das beschriebene Verfahren am besten geeignet ist. Das Wasser weist im betrachteten Druck- und Temperaturbereich sehr hohe Verdampfungsenthalpien auf. Ferner ist es in der Aufbereitung, der Handhabung und dem Einsatz in technischen Prozessen hinreichend bekannt, nicht toxisch, nicht umweltgefährdend und zur Wassereinspritzung in druckaufgeladenen Prozessen erprobt. Vorteilhaft ist die Verwendung von entmineralisiertem Wasser, womit Ablagerungen vermieden werden.

Nachfolgend wird anhand eines Schiffs, beispielsweise einem großen Frachtschiff mit einem Zweitakt-Dieselmotor, wie er in etwa 95 % der auf der Welt verfügbaren Handelsschiffe vorhanden ist, das Steuerungsverfahren zum Abbremsen als eine möglicher Verfahrensablauf beschrieben.

Das Schiff verfügt über einen Zweitakt-Dieselmotor, der als Langsamläufer ausgestaltet ist und über einen großen Hubraum verfügt. Dieses Schiff befindet sich im Betriebszustand und im Fahrbetrieb, d.h., dass der Zweitakt-Dieselmotor im Leistungsbetrieb gefahren wird.

Dieses Schiff soll nun aus seiner vollen Dienstgeschwindigkeit zum Stillstand gebracht werden, wofür es einen langen Stoppweg benötigt. Dieser lange Stoppweg stellt aufgrund des immer höheren Verkehrsaufkommens auf den Meeren dieser Welt ein erhebliches Sicherheitsrisiko dar. Der lange Stoppweg begründen sich aus der großen Schiffsmasse mit einer entsprechenden Ladung und einer hohen Dienstgeschwindigkeit. Somit ergibt sich eine hohe Bewegungsenergie des Schiffs bei voller Fahrt. Die Verzögerung erfolgt ausschließlich durch den Widerstand des Schiffsrumpfes und des Propellers im Wasserkörper.

Um das Schiff nun durch die Abbremsung mittels der Einbringung der nicht entzündbaren Flüssigkeit anstelle des Kraftstoffes abzubremsen, wird der Zweitakt-Dieselmotor aus der Betriebsart Leistungsbetrieb mit entsprechender Zufuhr von Schiffsdiesel als Kraftstoff in den Zustand Bremsbetrieb mit der entsprechenden Zufuhr von Wasser geschaltet. Nun wird anstelle des Schiffsdiesels Wasser in den Bereich des Brennraums in etwa dem oberen Totpunkt der jeweiligen Zylinder eingebracht, was daraufhin auf Grund der hohen Brennraumtemperatur in den gasförmigen Zustand übergeht und so beim Auslass dem System Energie entzieht.

Da der Propeller des Schiffs über eine Antriebswelle direkt mit der Kurbelwelle des Zweitakt-Dieselmotors verbunden ist, wird der Propeller, der durch den Nachstrom eigentlich weiter angetrieben wird, nun durch die Abbremsung der einzelnen Kolben ebenfalls abgebremst. Hierdurch wird ein Mitbewegen des Propellers mit relativ hoher Drehzahl durch den Nachstrom verhindert, vielmehr wird der Propeller im Nachstrom abbremsend für das gesamte Schiff eingesetzt.

Ursprünglich wirkte der hohen Drehzahl des Propellers nur die innere Reibung des Motortriebwerks entgegen, insbesondere die Reibung in den Lagern der Wellenleitung sorgte für eine kleine, aber unwesentliche Abbremsung.

Die in den Zylinderraum oberhalb des Kolbens eingebrachte nicht brenn- und/oder entzündbare Flüssigkeit wird aufgrund der hohen Temperatur im Brennraum verdunstet. Hierbei wird der gespannten Luft Wärmeenergie entzogen, die für den Phasenübergang der injizierten Flüssigkeit zwischen flüssig und dampfförmig verwendet wird. Insbesondere ist es bei diesem Steuerungsverfahren notwendig, dass die nicht brenn- und/oder entzündbare Flüssigkeit im oberen Totpunkt und/oder direkt nach dem oberen Totpunkt in den Zylinderraum eingebracht wird. In dieser Phase der linearen Bewegung des Kolbens, nämlich dem Umkehrpunkt im oberen Totpunkt, ist das Druckniveau am höchsten. Anstatt auf diesem sehr hohen Druckniveau Wärme in Form eines Verbrennens von einem Kraftstoffluftgemisch zuzuführen, wird an dieser Stelle die nicht brenn- und/oder entzündbare Flüssigkeit eingespritzt, um dem auf hohen Druckniveau befindlichen Luftvolumen Energie zu entziehen.

Insgesamt wird durch das Entziehen der Energie in dem nach dem Durchqueren des oberen Totpunkts durchlaufenden Entspannungsprozesses (Arbeitstakt) der Luft Wärme entzogen, die zur schlagartigen Verdunstung der nicht entzündbaren Flüssigkeit beim Phasenübergang vom flüssigen zum gasförmigen Zustand verwendet wird. Die in der Gasphase aufgenommene Energie aus der Luft innerhalb der Entspannungsphase führt zu einer Abnahme des Druckniveaus und durch den Auslass zu einer Abnahme der mechanischen und thermischen Energie innerhalb der Kolbenmaschine. Insbesondere nimmt während des Verdunstungsprozesses die Temperatur des gesamten Gemisches ab und resultierend aus dieser Temperaturabnahme sinkt der Druck des Gesamtgemisches. Die aufgenommene mechanische Arbeit, die in thermische Energie umgewandelt wurde, wird anschließend durch den Gasaustausch aus dem Zylinder in das Abgassystem herausgeleitet, wodurch diese Energie dem Gesamtsystem entzogen wird und insgesamt eine Bremswirkung innerhalb des Zweitakt-Dieselmotors durch Energieumwandlung erfolgt.

## Patentansprüche

1. Verfahren zum Abbremsen einer Brennkraftmaschine mit einem Brennraum und einer nicht entzündbaren Flüssigkeit, wobei die nicht entzündbare Flüssigkeit in den Brennraum direkt eingespritzt wird, **dadurch gekennzeichnet, dass** die nicht entzündbare Flüssigkeit zu dem Zeitpunkt eingespritzt wird, in dem bei Leistungsbetrieb der Brennkraftmaschine der Kraftstoff eingebracht und/oder entzündet worden wäre.

2. Verfahren nach Anspruch 1, **dadurch gekennzeichnet, dass** die Brennkraftmaschine eine Gasturbine mit einem Brennraum ist, wobei die nicht entzündbare Flüssigkeit in den Brennraum der Gasturbine eingespritzt wird.

3. Verfahren nach Anspruch 1, **dadurch gekennzeichnet, dass** die Brennkraftmaschine eine Kolbenmaschine mit einem Brennraum ist, wobei die nicht entzündbare Flüssigkeit in den Brennraum der Kolbenmaschine eingespritzt wird.

4. Verfahren nach Anspruch 3, **dadurch gekennzeichnet, dass** die Kolbenmaschine eine Rotationskolbenmaschine ist, wobei während der Rotationsbewegung des Rotationskolbens kurz vor, im und/oder nach der engsten Stelle, dem oberen Totpunkt, die nicht entzündbare Flüssigkeit in den Brennraum eingespritzt wird.

5. Verfahren nach Anspruch 3, **dadurch gekennzeichnet, dass** die Kolbenmaschine eine Hubkolbenmaschine ist, wobei während der linearen Bewegung des Kolbens kurz vor, im und/oder nach dem oberen Totpunkt die nicht entzündbare Flüssigkeit in den Brennraum eingespritzt wird.

6. Verfahren nach Anspruch 4 oder 5, **dadurch gekennzeichnet, dass** beginnend im Bereich von 5°, insbesondere 0,5° vor dem oberen Totpunkt bis zu 30°, insbesondere 15° nach dem oberen Totpunkt, bevorzugt im oberen Totpunkt, die nicht entzündbare Flüssigkeit eingespritzt wird.

7. Verfahren nach einem der Ansprüche 4 bis 6, **dadurch gekennzeichnet, dass** das Einspritzen der nicht entzündbaren Flüssigkeit vor dem unteren Totpunkt endet.

8. Verfahren nach Anspruch 5, 6 oder 7, **dadurch gekennzeichnet, dass** die Hubkolbenmaschine als Zweitaktmotor zwei Takte umfasst, wobei ein erster Takt mit dem Schritt Arbeiten vom oberen Totpunkt zum unteren Totpunkt oder bis zum Öffnen eines Auslasses verläuft und die nicht entzündbare Flüssigkeit vor, zu Beginn des und/oder im ersten Takt eingespritzt wird.

9. Verfahren nach einem der Ansprüche 4 bis 7, **dadurch gekennzeichnet, dass** die Kolbenmaschine als Viertaktmotor vier Takte umfasst, wobei ein dritter Takt vom oberen Totpunkt zum unteren Totpunkt oder bis zum Öffnen eines Auslasses mit dem Schritt Arbeiten verläuft und die nicht entzündbare Flüssigkeit vor, zu Beginn des und/oder im dritten Takt eingespritzt wird.

10. Verfahren nach einem der vorangehenden Ansprüche, **dadurch gekennzeichnet, dass** die nicht entzündbare Flüssigkeit während des Einspritzens vernebelt wird.

11. Verfahren nach einem der vorangehenden Ansprüche, **dadurch gekennzeichnet, dass** bei einer Brennkraftmaschine mit einem Kraftstoffeinspritzsystem die nicht entzündbare Flüssigkeit über das Kraftstoffeinspritzsystem eingespritzt wird.

12. Verfahren nach einem der Ansprüche 1 bis 10, **dadurch gekennzeichnet, dass** bei einer Brennkraftmaschine mit einem Kraftstoffeinspritzsystem und einem zweiten Einspritzsystem, die nicht entzündbare Flüssigkeit über das zweite Einspritzsystem eingespritzt wird.

13. Verfahren nach einem der vorangehenden Ansprüche, **dadurch gekennzeichnet, dass** Wasser als nicht entzündbare Flüssigkeit eingespritzt wird.

## Claims

1. Method for braking an internal combustion engine with a combustion chamber and a non-flammable liquid, the non-flammable liquid being injected directly into the combustion chamber, **characterised in that** the non-flammable liquid is injected at the instant at which the fuel would have been introduced and/or ignited during power operation of the internal combustion engine.

2. Method according to Claim 1, **characterised in that** the internal combustion engine is a gas turbine with a combustion chamber, the non-flammable liquid being injected into the combustion chamber of the gas turbine.

3. Method according to Claim 1, **characterised in that** the internal combustion engine is a piston engine with a combustion chamber, the non-flammable liquid being injected into the combustion chamber of the piston engine.

4. Method according to Claim 3, **characterised in that** the piston engine is a rotary piston engine, the non-flammable liquid being injected into the combustion chamber during the rotary movement of the rotary piston shortly before, at and/or after the narrowest point, the top dead centre.

5. Method according to Claim 3, **characterised in that** the piston engine is a reciprocating piston engine, the non-flammable liquid being injected into the combustion chamber during the linear movement of the piston shortly before, at and/or after the top dead centre.

6. Method according to Claim 4 or 5, **characterised in that** the non-flammable liquid is injected starting in the range from 5°, in particular 0.5°, before the top dead centre, up to 30°, in particular 15°, after the top dead centre, preferably at the top dead centre.

7. Method according to one of Claims 4 to 6, **characterised in that** the injection of the non-flammable liquid ends before the bottom dead centre.

8. Method according to Claim 5, 6 or 7, **characterised in that** the reciprocating piston engine comprises, as a two-stroke engine, two strokes, a first stroke running with the working step from the top dead centre to the bottom dead centre or until the opening of an outlet, and the non-flammable liquid being injected before, at the beginning of and/or during the first stroke.

9. Method according to one of Claims 4 to 7, **characterised in that** the piston engine comprises, as a four-stroke engine, four strokes, a third stroke running with the working step from the top dead centre to the bottom dead centre or until the opening of an outlet, and the non-flammable liquid being injected before, at the beginning of and/or during the third stroke.

10. Method according to one of the preceding claims, **characterised in that** the non-flammable liquid is atomised during injection.

11. Method according to one of the preceding claims, **characterised in that**, in an internal combustion engine with a fuel injection system, the non-flammable liquid is injected via the fuel injection system.

12. Method according to one of Claims 1 to 10, **characterised in that**, in an internal combustion engine with a fuel injection system and a second injection system, the non-flammable liquid is injected via the second injection system.

13. Method according to one of the preceding claims, **characterised in that** water is injected as the non-flammable liquid.

## Revendications

1. Procédé pour freiner un moteur à combustion interne avec une chambre de combustion et un liquide ininflammable, ledit liquide ininflammable étant injecté directement dans la chambre de combustion, **caractérisé en ce que** le liquide ininflammable est injecté à l'instant où le carburant aurait été introduit et/ou enflammé si le moteur à combustion avait été en mode de travail.

2. Procédé selon la revendication 1, **caractérisé en ce que** le moteur à combustion interne est une turbine à gaz avec une chambre de combustion, le liquide ininflammable étant injecté dans la chambre de combustion de la turbine à gaz.

3. Procédé selon la revendication 1, **caractérisé en ce que** le moteur à combustion interne est une machine à piston avec une chambre de combustion, le liquide ininflammable étant injecté dans la chambre de combustion de la machine à piston.

4. Procédé selon la revendication 3, **caractérisé en ce que** la machine à piston est une machine à piston rotatif, le liquide ininflammable étant injecté dans la chambre de combustion pendant le mouvement de rotation du piston rotatif juste avant, au moment et/ou après avoir atteint l'emplacement le plus étroit, à savoir le point mort haut.

5. Procédé selon la revendication 3, **caractérisé en ce que** la machine à piston est une machine à piston alternatif, le liquide ininflammable étant injecté dans la chambre de combustion pendant le mouvement linéaire du piston juste avant, au moment et/ou après le point mort haut.

6. Procédé selon la revendication 4 ou 5, **caractérisé en ce que** le liquide ininflammable est injecté de préférence au moment du point mort haut commençant dans une plage allant de 5°, en particulier 0,5°, avant le point mort haut, jusqu'à 30°, en particulier 15°, après le point mort haut.

7. Procédé selon l'une des revendications 4 à 6, **caractérisé en ce que** l'injection du liquide ininflammable s'achève avant le point mort bas.

8. Procédé selon la revendication 5, 6 ou 7, **caractérisé en ce que** la machine à piston alternatif, en tant que moteur à deux temps, comporte deux temps, un premier temps avec le temps moteur s'étendant depuis le point mort haut jusqu'au point mort bas ou jusqu'à l'ouverture d'une sortie, et le liquide ininflammable étant injecté avant, au début et/ou durant le premier temps.

9. Procédé selon l'une des revendications 4 à 7, **caractérisé en ce que** la machine à piston, en tant que moteur à quatre temps, comporte quatre temps, un troisième temps avec le temps moteur s'étendant depuis le point mort haut jusqu'au point mort bas ou jusqu'à l'ouverture d'une sortie, et le liquide ininflammable étant injecté avant, au début et/ou durant le troisième temps.

10. Procédé selon l'une des revendications précédentes, **caractérisé en ce que** le liquide ininflammable est vaporisé pendant l'injection.

11. Procédé selon l'une des revendications précédentes, **caractérisé en ce que** dans un moteur à combustion interne avec un système d'injection de carburant, le liquide ininflammable est injecté par l'intermédiaire du système d'injection de carburant.

12. Procédé selon l'une des revendications 1 à 10, **caractérisé en ce que** dans un moteur à combustion interne avec un système d'injection de carburant et un deuxième système d'injection, le liquide ininflammable est injecté par l'intermédiaire du deuxième système d'injection.

13. Procédé selon l'une des revendications précédentes, **caractérisé en ce que** de l'eau est injectée en tant que liquide ininflammable.
